Europäisches Patentamt

European Patent Office

Office européen des brevets

(11) Publication number: **0 033 036**
**B1**

(12) **EUROPEAN PATENT SPECIFICATION**

(45) Date of publication of patent specification: **04.07.84**

(21) Application number: **80304675.4**

(22) Date of filing: **22.12.80**

(51) Int. Cl.³: **C 08 F 10/00, C 08 F 4/62**

(54) **Catalyst component.**

(30) Priority: **10.01.80 GB 8000890**
**06.06.80 GB 8018581**

(43) Date of publication of application:
**05.08.81 Bulletin 81/31**

(45) Publication of the grant of the patent:
**04.07.84 Bulletin 84/27**

(84) Designated Contracting States:
**BE CH DE FR GB IT LI NL SE**

(56) References cited:
**GB - A - 1 336 881**
**GB - A - 1 348 255**
**GB - A - 1 373 982**
**GB - A - 1 436 426**
**US - A - 3 114 742**

(73) Proprietor: **IMPERIAL CHEMICAL INDUSTRIES PLC**
**Imperial Chemical House Millbank**
**London SW1P 3JF (GB)**

(72) Inventor: **Hartshorn, Angus John**
**44 Cheltenham Crescent**
**Runcorn Cheshire (GB)**
Inventor: **Jones, Eric**
**94 Quarry Lane**
**Kelsall Tarporley Cheshire (GB)**

(74) Representative: **Bate, Bernard James et al,**
**Imperial Chemical Industries PLC Legal**
**Department: Patents PO Box 6**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a component of an olefin polymerisation catalyst, a process for the production thereof, polymerisation catalysts including the said component and an olefin polymerisation process using such catalysts.

It is well known that olefins such as ethylene, propylene and higher alpha-olefins, e.g. hexane, can be polymerised using the so-called Ziegler-Natta catalysts. The term "Zieger-Natta catalyst" is generally used to mean a catalyst system comprising a compound of a transition metal of Groups IVA to VIA of the Periodic Table (typically titanium tetrachloride) together with a Ziegler catalyst activator such as an activating organometallic compound of a non-transition metal of Groups IA to IIIA of the Periodic Table (typically triethyl aluminium). Such Ziegler-Natta catalysts may be supported on particulate support materials; suitable support materials include inorganic oxides such as silica and/or alumina.

One such catalyst is disclosed in UK Patent 1,373,982 which catalyst is obtained by (a) reducing a transition-metal compound, the metal of which is in a state of maximum valency, with a reducing mixture of an aluminium compound and an organomagnesium compound to form a catalyst component and (b) subsequently adding a so-called activating organoaluminium compound to the said component to activate the said component and form the catalyst.

UK Patent Specification No. 1 336 881 teaches that incorporation of an organometallic compound of a metal of Groups I to III of the Periodic Table in a catalyst component prepared by reacting a particulate support material with a transition metal hydrocarbyl complex of a transition metal of Groups IVA and VA of the Periodic Table increases the activity of a catalyst prepared therefrom.

UK Patent Specification No. 1 348 255 teaches that Ziegler-catalysed olefin polymerisation reactants can be interrupted by adding thereto certain specified reagents, e.g. a hydrogen halide, water and alcohols.

United States Patent Specification No. 3 114 742 teaches that Ziegler-catalysed olefin polymerisation reactants can be modified by the addition thereto of certain specified reagents, e.g. hydrogen, tetrachloroethane and water.

For certain applications, for example when a polyalkylene, for example, polyethylene or a copolymer thereof, is used for blow moulding purposes, it is desirable to have a polymer having a broader molecular weight distribution than that of the polymers obtained when using catalysts such as described in UK Patent 1 373 982. We have now found that the incorporation into catalysts of the type disclosed in UK Patent 1 373 982 of certain organometallic compounds (in addition to the organomagnesium compound and the aluminium compound envisaged in UK 1 373 982) leads to a desirable broadening of the molecular weight distribution of the resulting polymer.

Accordingly, one aspect of the present invention provides a catalyst component which is the product of treating at least one particulate support material, preferably having a reactive surface (as hereinafter defined), with a component A which is at least one organomagnesium compound; a component B which is at least one aluminium compound of the general formula $R_nAlY_{3-n}$ wherein R, each of which may be the same or different, represents a hydrocarbyl group or substituted hydrocarbyl group such as alkyl, aryl, cycloalkyl, aralkyl, alkenyl or alkadienyl, n is 0, 1, 2, 3 or a fraction less than 3, and Y is a singly charged ligand such as hydride, fluoride, chloride, bromide, iodide or oxyhydrocarbyl; and a component c which is at least one transition metal compound of Groups IVA, VA or VIA of the Periodic Table characterised in that the at least one particulate support material is treated with a component D which is at least one organometallic compound of the general formula $R'_mMX_p$ wherein M is a metal of Groups IX, IIA, IIB, IIIB, IVA, VA or VIA of the Periodic Table, R' is a hydrocarbyl or a substituted hydrocarbyl group, X is a singly charged anionic ligand or a monodentate neutral ligand, m is an integer up to the highest valency of the metal M and p is 0 or an integer up to 2 less than the valency of the metal M, except that when M is a metal from Group VIA p is always 0, and when M is a metal from Groups IVA, or VA m has a value from 2 to the highest valency of the metal and p has a value from 0 to a value of 2 less than the valency of the metal M; and optionally a component E which is at least one pacifying agent, which treatment may be effected in any order or combination with the provisos that (i) at least one of the aforesaid components A to D contains a halide group, (ii) where component A or component B or component D is a Ziegler-Natta activator and the at least one particulate support material is treated therewith after treatment with component C, the at least one particulate support material is treated with component E after treatment with the said activator, (iii) where the metal M in component D is magnesium, component D and component A must not be added consecutively or together as a mixture, and that where the metal M in component D is aluminium, component D, and component B must not be added consecutively or together as a mixture or complex and (iv) where (a) the at least one particulate support material is treated with component E, (b) component E is a halogen-containing compound, (c) component C is titanium tetrachloride and (d) the metal M in component D is a transition metal, the at least one particulate support material is not treated with a mixture or complex of component A and component B.

All references to the Periodic Table are to the version of the Periodic Table of the Elements printed

**O 033 036**

inside the back cover of "Advanced Inorganic Chemistry" by F. A. Cotton and G. Wilkinson 3rd Edition, Interscience Publishers 1976.

Where the preparation of the catalyst component of the present invention includes treatment with a so-called "pacifying agent" we have found that the activity of catalysts prepared from such pacified catalyst components is greater than that of catalysts prepared from corrosponding unpacified catalyst components.

By "reactive surface" we mean a plurality of sites on, and preferably attached to, the surface of the at least one substantially inert particulate support material, which sites are capable of abstracting e.g. a magnesium hydrocarbyl from a solution thereof. Preferably the said sites are OH groups chemically bonded to the surface of the at least one particulate support material and more preferably the at least one particulate support material is an inorganic material. Where surface OH groups are present they are capable of acting as a proton source, that is they have an acidic function. Such a material will be "substantially inert" in that whereas the said OH groups are capable of reacting with, say, component A and component D the bulk of the at least one particulate support material is chemically inert. Particularly good examples of such particulate support materials are silica and alumina or mixtures thereof. These comprise a matrix of silicon or aluminium and oxygen atoms, to the surface of which OH groups are attached, the hydrogen atoms of said groups having an acidic function. However, apart from the presence of these OH groups, silica and alumina are generally regarded as chemically inert. Within the terms silica and alumina we include silica and alumina based materials containing small amounts of other suitable inorganic oxides, such as magnesium oxide and zinc oxide. The preferred particulate support materials are silica and/or alumina.

The at least one organomagnesium compound used for the preparation of the catalyst components according to the present invetion are compounds in which at least one hydrocarbyl group is directly bonded to magnesium through a carbon atom. Preferably two hydrocarbyl groups bonded in this way are present for each magnesium atom, which hydrocarbyl groups may be the same or different, although we do not exclude the possibility that one of the groups bonded to the magnesium may be halogen or oxyhydrocarbyl. The hydrocarbyl group may be an alkyl group, aryl group, cycloalkyl group, aralkyl group, alkadienyl group or an alkenyl group. The number of carbon atoms in the hydrocarbon group is generally between 1 and 30, but this number is not critical. Preferably the organomagnesium compounds are soluble in liquid hydrocarbons, for example toluene, hexane. Examples of magnesium compounds particularly suitable in the preparation of catalyst components according to the invention are diethyl magnesium, dipropyl magnesium, di-isopropyl magnesium, dibutyl or disobutyl magnesium, butyl octyl magnesium, diamyl magnesium, dihexyl magnesium, diallyl magnesium, didecyl magnesium, and didodecyl magnesium, dicycloalkyl magnesium with identical or different cyclo-alkyl groups containing 3 to 12 carbon atoms, preferably 5 or 6 carbon atoms. The magnesium may carry an alkyl and a cyclo-alkyl group. Diphenyl magnesium is the preferred aromatic compound although e.g. ditolyl-dixylyl magnesium, and magnesium aryls derived from compounds with two or more condensed or non-condensed aromatic nuclei can also be used. Catalysts prepared with diaryl magnesium compounds may have a relatively lower activity.

Preferably a dialkyl magnesium is used wherein the alkyl groups are $C_1$—$C_{10}$ groups, particularly preferably dibutyl magnesium which may be present as a mixture of dibutyl magnesiums, for example a mixture of di-n-butyl magnesium and di-iso-butyl magnesium.

Preferably the amount of the at least one organomagnesium compound used in the preparation of catalyst components of the present invention is sufficient to react with at least substantially all the reactive sites on the at least one particulate support material, where such sites are present thereon.

In the at least one aluminium compound $R_nAlY_{3-n}$ preferably R, where present, is alkyl, having 1 to 4 carbon atoms, more preferably ethyl or isobutyl, and preferably Y, where present, is a halide, particularly preferably chloride or bromide, more particularly preferably chloride.

Suitable aluminium compounds $R_nAlY_{3-n}$ include aluminium chloride, aluminium bromide, monoethyl aluminium dichloride, ethyl aluminium sesqui-chloride and diethyl aluminium chloride.

When M in organometallic compound $R_m^1MX_p$ is a metal from Groups IA, IIA, IIB or IIIB of the Periodic Table it is preferred that p is O and m is the highest valency of the metal.

Preferred organometallic compound $R_m^1MX_p$ are those in which the metal M is is a transistion metal of Groups IVA, VA or VIA, more preferably titanium, vanadium, molybdenum, zirconium or chromium, and especially zirconium. The monovalent ligand X, where it is present, is preferably halogen.

Hydrocarbyl groups of different types may be associated with a single metal atom M.

Suitable hydrocarbyl groups $R^1$ include alkyl and alkenyl groups (including $\pi$-alkenyl groups such as $\pi$-allyl) and substituted derivatives thereof. Examples of transition metal complexes include tetrakis ($\pi$-allyl)zirconium or hafnium, tris ($\pi$-allyl)chromium, tetrakis ($\pi$-methallyl) zirconium or hafnium, tris ($\pi$-methallyl)chromium and zirconium tris ($\pi$-allyl) bromide.

A preferred class or organometallic compounds $R_m^1MX_p$ are organic transition metal complexes in which some or all of the groups, or ligands $R^1$ are substituted alkyl groups of general formula —$CH_2Z$ $\sigma$-bonded to the transition metal through the carbon atom. In this general formula Z may represent a group capable of interaction with the vacant d-orbitals of the metal M. Preferably all of the groups $R^1$ have this formula, but it is possible for some of them to comprise other hydrocarbyl groups.

Suitable substituent groups Z include aromatic and polyaromatic groups such as phenyl and naphthyl, giving rise in the formula —$CH_2Z$ to the alkaryl groups benzyl and (1-methylene-1-naphthyl) and ring substituted derivatives thereof, for example p-methyl benzyl.

Z may also be a cycloalkenyl group, such as a cyclo-octenyl group.

Z may also comprise a group of general formula: $A(R^2)_3$ where A represents carbon, silicon, germanium, tin or lead, and each $R^2$, which may be the same or different, represents a hydrocarbyl group or hydrogen; preferably at least one $R^2$ is an alkyl group.

Examples of this preferred class of organometallic compounds $R^1MX_n$ include zirconium and titanium tetra (benzyl), tris(benzyl)zirconium chloride, zirconium tetrakis(p-methylbenzyl), zirconium and titanium tetrakis(1-methylene-1-naphthyl), zirconium tetrakis(trimethylsilylmethylene), zirconium tetrakis(neopentyl) and zirconium tetrakis(neophyl).

Examples of preferred organometallic compounds $R^1MX_n$ containing monovalent ligands X include tris($\pi$-allyl)zirconium chloride, bromide or iodide and the equivalent $\pi$-methallyl and benzyl compounds.

The at least one transition metal compound of Groups IVA, VA or VIA of the Periodic Table employed in the preparation of the catalyst component of the present invention may be any of the transition metal compounds, or mixtures thereof, known to be useful in forming Ziegler-Natta catalysts.

The transition metal is preferably titanium, vanadium, molybdenum, zirconium or chromium, especially titanium. Suitable compounds include halides, halo-oxides alkoxides, haloalkoxides, and acetyl acetonates, especially chloride and alkoxides. The preferred compound is titanium tetrachloride.

Suitable pacifying agents, where they are employed in the preparation of catalyst components of the present invention, include agents which, it is believed, are capable of breaking metal-carbon or metal-hydrogen bonds in the catalyst component of the present invention but which do not have a deleterious effect on the catalyst component. Such agents include *inter alia,* oxygen, carbon monoxide, carbon dioxide, carbon tetrahalides, halo-hydrocarbons and protic agents. Typically protic agents are hydrogen halides, carboxylic acids, alcohols, water, amines and acetylacetone. Preferably the pacifying agent is an aliphatic alcohol having from 1 to about 6 carbon atoms; an anhydrous hydrogen halide, e.g. hydrogen chloride, or hydrogen bromide; a halohydrocarbon e.g. an alkyl halide such as t-butyl chloride; or a carbon tetrahalide e.g. carbon tetrachloride.

The quantity of the at least one pacifying agent, where it is used in the preparation of a catalyst component of the present invention, is sufficient to break substantially all the metal hydrocarbyl or metal-hydride bonds in the catalyst component. Conveniently the pacifying agent is added to a suspension of the at least one particulate support material which has been treated with the at least one organomagnesium compound, the at least one aluminium compound $R_nAlY_{3-n}$, the at least one organo-metallic compound $R_m^1MX_p$ and the at least one transition metal compound of Groups IVA, VA or VIA of the Periodic Table. Where an excess of a gaseous pacifying agent is used the excess may be removed by sparging with nitrogen.

The molar ratio of the at least one aluminium compound $R_nAlY_{3-n}$ to the at least one organomagnesium compound in the catalyst component of the present invention is preferably between 0.5 and 100, particularly between 1.0 and 80 and more particularly preferably between 1.0 and 10.0. The molar ratio of the at least one aluminium compound to the at least one organometallic compound $R_m^1MX_p$ is preferably between 1.0 and 100 and particularly between 1 and 20. The molar ratio of the at least one aluminium compound to the at least one transition metal compound is preferably between 1 and 2000, particularly between 2 and 1500 and more particularly preferably between 2 and 100.

The at least one particulate support material may be treated with the at least one organomagnesium compound, the at least one aluminium compound $R_nAlY_{3-n}$, the at least one organo-metallic compound $R_m^1MX_p$ and the at least one transition metal compound of Groups IVA, VA or VIA in any order, within the limits of the provisos as hereinbefore defined, either separately or in combination with one another (as two of the three compounds or as all three compounds).

A further aspect of the present invention provides an olefin polymerisation catalyst which comprises
(a) the catalyst component as hereinbefore defined and
(b) an activator which is at least one organometallic compound of a non-transition metal of Groups I—IV of the Periodic Table.

Preferably the activator is an organometallic derivative of a metal of Groups IA, IIA, IIB, IIIB or IVB of the Periodic Table, particularly preferably the metal is aluminium and more particularly preferably the activator is a trialkyl aluminium, dihaloalkyl aluminium or halodialkyl aluminium. It will be appreciated that sufficient of the said activator is employed to transform the metal atoms of the transition metal compound known to be useful in forming Ziegler-Natta catalysts to an active state.

The catalyst component of the present invention may be treated with the aforesaid activator by methods known in the art, for example, they may be reacted totally outside or inside the polymerisation vessel in which the catalyst is to be used or activation may be effected partially outside the polymerisation vessel and completed inside the said polymerisation vessel.

A further aspect of the present invention provides a process for the polymerisation or copolymerisation of an olefinically unsaturated monomer which process comprises contacting, under

4

polymerisation conditions, at least one olefin monomer with a catalyst in accordance with the present invention.

The term "olefinically unsaturated monomer" is intended to include mono-olefins such as ethylene, propylene and 4-methylpentene-1.

The catalyst of the present invention may also be used to initiate the copolymerisation of two or more olefinically unsaturated monomers. For example, ethylene may be copolymerised with a small amount of propylene, butene, hexene or decene, butadiene or styrene.

Polymerisation processes according to the present invention may be carried out by techniques generally used for polymerisation processes of the type using Ziegler catalysts.

The choice of conditions of pressure and temperature will cary with factors such as the nature of the monomer and catalyst and whether liquid, e.g. bulk or diluent, or gas phase polymerisation is used.

For example, when ethylene is polymerised, pressure from sub-atmospheric to several hundred thousand kilopascals may be used. Low pressure (say from 10 to 30 kilopascals) and intermediate pressure (say from 3000 to 30,000 kilopascals) polymerisation may be carried out using conventional equipment; but very high pressure polymerisation must be performed using suitable specialised reactors and pumping equipment. However, since, generally speaking, the higher the pressure the higher the activity, the use of such techniques may be justified. If very high pressures are used, it is preferred that conditions are such that the ethylene feed and polyethylene produced are maintained in a single fluid phase, i.e. the pressure should exceed 500 kg/cm$^2$ preferably 1000 to 3000 kg/cm$^2$ and the temperature should be greater than 125°C, say 140—300°C. This type of process is usually operated in a continuous manner.

A wide range of temperatures may be used, but in general low and intermediate pressure ethylene polymerisations are carried out at temperatures in the range 50—160°C.

When the process of the present invention is used to polymerise propylene, it is preferred to operate under conditions commonly used for the polymerisation of propylene. However, polymerisation of propylene under other conditions, e.g. high pressure, is not excluded.

It is also within the scope of the present invention to use the catalysts thereof to initiate the copolymerisation of ethylene and propylene together and/or other olefinically unsaturated monomers.

The polymerisation process of the present invention may be carried out in the liquid or gaseous phase (i.e. in the essentially absence of a liquid medium) and preferably in the gaseous phase. Where polymerisation is effected in the liquid phase, and the monomer is not liquid under the polymerisation conditions, the monomer may be dissolved in a suitable solvent. Examples of suitable solvents are aliphatic or aromatic hydrocarbons; for instance pentane, hexane, heptane, octane, decane, benzene, toluene and mixtures thereof.

Polymerisation may be effected either in a batch manner or on a continuous basis, and the catalyst components of the present invention and the activator therefor may be introduced into the polymerisation vessel separately or the catalyst component and activator may be mixed together before being introduced into the polymerisation reactor.

Preferably, however, the polymerisation process of the present invention is effected as a continuous gas phase process such as a fluid bed process. A fluid bed reactor for use in the process of the present invention typically comprises a reaction zone and a so-called velocity reduction zone. The reaction zone comprises a bed of growing polymer particles, formed polymer particles and a minor amount of catalyst particles fluidised by the continuous flow of the gaseous monomer, and the gaseous diluent which is used to remove heat of polymerisation from the reaction zone. A suitable rate of gas flow may be readily determined by simple experiment. Make up of gaseous monomer to the circulating gas stream is at a rate equal to the rate at which particulate polymer product and gas is withdrawn from the reactor and the composition of the gas passing through the reactor is adjusted to maintain an essentially steady state gaseous composition within the reaction zone. The gas leaving the reaction zone is passed to the velocity reduction zone where entrained particles are removed. Finer entrained particles and dust may be removed in a cyclone and/or fine filter. The said gas is compressed in a compressor and passed through a heat exchanger wherein it is stripped of the heat of polymerisation and then returned to the reaction zone.

Chain transfer agents may be used in a polymerisation process according to the present invention, and when ethylene is polymerised their use is normally desirable as the polyethylene produces is of very high molecular weight. Hydrogen may be conveniently used in accordance with usual practice. However, some solvents may act as chain transfer agents.

The process of the present invention is preferably effected under an atmosphere free of oxygen, for example under an atmosphere of an inert gas, e.g. nitrogen, or of the monomer to be polymerised. It is also preferred to effect the process using apparatus and solvents which have been carefully freed from impurities, such as oxygen, water and other substances which would otherwise react with the catalysts.

The invention is illustrated by the following Examples.

In the examples hexane and heptane were purified by passage through R$_{3-11}$ copper catalyst and 5A molecular sieve and finally by sparging with pure nitrogen immediately before use.

Ethylene was purified by passage through R$_{3-11}$ copper catalyst and 5A molecular sieves. Butene

5

was purified by passage through $R_{3-11}$ copper catalyst and 3A molecular sieve. Hydrogen was purified by passage through a catalytic deoxygenation unit and 5A molecular sieve. Melt Flow Index $MFI_{2.16}$ was measured under the conditions of ASTM D—1238, condition E at 190°C and reported as grams per 10 minutes.

Melt Flow Index $MFI_{21.6}$ was measured under the conditions of ASTM D—1238, condition F using 10 times the weight used in the aforesaid melt index test.

$$\text{Flow Ratio} = \frac{MFI_{21.6}}{MFI_{2.16}}$$

### Example 1

This example is a comparative example illustrating the preparation of a known catalyst and the use thereof in the preparation of an ethylene copolymer.

A particulate support material comprising alumina (Ketjen Grade B (Registered Trade Mark) supplied by Koninklijke Zwavelzurfarbrieken v/n Ketjen NV), air classified to a particle size in the range 20 to $120 \times 10^{-6}$ metres was heated at 700°C for 4 hours under a flow of dry nitrogen to free it from adsorbed water.

To 130 ml of n-hexane at −20°C was added with stirring 72 mls of molar ethyl aluminium dichloride in n-hexane, 36 mls of 0.62 molar dibutyl magnesium in Isopar e and 12 mls of 0.62 molar titanium tetrachloride in hexane. The mixture was stirred at −20°C for 3 hours. 13.8 grams of the dried alumina was slurried in 100 mls of hexane in an atmosphere of dry nitrogen and 46 mls of the catalyst mixture added with stirring at ambient temperature. The solvent was removed under a stream of nitrogen at 80°C and the resulting powder dried under vacuum to afford a catalyst component which was then reslurried in heptane to give a concentration of 0.0138 m A.Ti.ml$^{-1}$ (milliatom titanium per millilitre of slurry).

A one US gallon stainless steel pressure vessel was prepared by heating it to 100°C and evacuating with an efficient vacuum pump. The vessel was cooled to 60°C and 2 litres of purified hexane were added. The vessel was then sparged at reaction pressure with about 200 litres of pure ethylene over a period of 30 minutes to remove any residual moisture and oxgen, after which it was vented, 6 mls of a molar solution of aluminium tri-iso-butyl in heptane as activator and then the catalyst component as a slurry (containing 0.01 mA of titanium) were injected against a stream of ethylene. The vessel was then sealed and pressurised with hydrogen to 1.7 kg/cm²g and then to 13.6 kg/cm²g with ethylene. During pressurisation, 200 mls of butene-1 was added from a Klinger gauge. When full reaction pressure (13.6 kg/cm²g) was reached the vessel was stirred at 1000 rpm and polymerisation commenced. Reaction was allowed to continue for 2 hours at 80°C, during which time ethylene was added as required to maintain reaction pressure at 13.6 kg/cm²g. After 2 hours, the reactor was vented and cooled.

The copolymer slurry was removed from the autoclave and to this was added 1 litre of de-ionised water and 0.02 wt/vol % of sodium di(ethylhexyl) sulphosuccinate (Aerosol OT) calculated on polymer slurry, i.e. diluent, as a wetting agent. Steam at 100°C was then passed into the stirred vessel at about 25 g per minute and the mixture distilled at a temperature of about 60°C, distillation being continued until no more organic material separated from the distillate. The copolymer product, which was granular in form, was then filtered from the aqueous slurry remaining in the distillation vessel, washed with water and dried under vacuum at approximately 60°C. 261 gms of copolymer product were obtained and were found to contain 1.0 molar per cent of butene-1. The melt flow index (M.F.I.) of the copolymer was 0.22 and the flow ratio was 25 being indicative of a very narrow molecular weight distribution.

The mole % comonomer incorporation was obtained from the IR analysis of the total methyl group count of the copolymer. The total methyl count, i.e. methyl groups which are at ends of molecules and those which are at ends of side branches, was measured using a mathematical comparison, by computer, of the absorbance curve from 1310—1430 cm$^{-1}$ with two standard polyethylenes of known methyl count. A correction was then made for those methyl groups which are ends of molecules by subtracting the methyl count of a linear polyethylene of similar molecular weight distribution having a similar MFI. The corrected methyl count was then taken to be the side group content and expressed as mole % co-monomer incorporation.

### Examples 2—4

These examples illustrate the preparation of catalysts components according to the present invention.

Alumina as used in Example 1 was dried by heating at 500°C for 2 hours under a flow of dry nitrogen.

A portion of the dried alumina was slurried in hexane or heptane in an atmosphere of dry nitrogen. A portion of a 0.196 M solution of pure tetrabenzyl zirconium in toluene was added and stirred at room temperature, after which ethyl aluminium dichloride in hexane was added and stirred at room temperature. Any unreacted ethyl aluminium dichloride was then removed with the supernatant liquid and the residual solid washed three times with 100 ml portions of hexane or heptane. A slurry of the residual solid in hexane or heptane was then treated with 0.62M dibutyl magnesium in Isopar E, stirred and then finally a solution of 1.0 M titanium tetrachloride in hexane or heptane was added, stirred at ambient temperature and heated to reflux to afford a slurry of a catalyst component according to the present invention.

In Example 2 the slurry was used as prepared, in Examples 3 and 3 the catalyst component was filtered off and dried under vacuum.

Details of the preparation of catalyst components according to the present invention are given in Table 1.

### Example 5

The slurry of catalyst component prepared in Example 2 was cooled, dry hydrogen chloride gas was passed through the slurry for 2 minutes, followed by nitrogen sparging for 15 minutes to remove excess hydrogen chloride. The solid was filtered off and dried under vacuum to afford a pacified catalyst component according to the present invention.

### Example 6

4.25 gms of the catalyst component prepared in Example 3 was slurried in heptane and the process of Example 5 was repeated except that hydrogen chloride was bubbled through the slurry for 1 minute to afford a pacified catalyst component.

### Example 7

4.40 gms of the catalyst component prepared in Example 4 was slurried in 80 mls of heptane. 2 mls of tert-butyl chloride was added to the slurry and the mixture was stirred at 70°C for 2 hours. The solid was filtered off, washed and dried under vacuum to afford a pacified catalyst component according to the present invention.

TABLE 1

| Ex No | Alumina Slurry | | Reaction with zirconium tetrabenzyl | | Reaction with ethyl aluminium dichloride | | | Reaction with magnesium butyl | | | Reaction with titanium tetrachloride | | |
|---|---|---|---|---|---|---|---|---|---|---|---|---|---|
| | Wt of $Al_2O_3$ (gm) | Liquid (Vol in ml) | Vol (ml) | Time (min) | Vol (mls) | Conctn | Time (min) | Vol (ml) | Time (min) | Temp (°C) | Vol (ml) | Time (mins) Ambient Temp | Time (mins) 70°C |
| 2 | 6.5 | Hexane (50) | 22 | 15 | 8.1 | 0.62M[a] | 15 | 3 | 15 | 20 | 3[a] | 15 | 30 |
| 3 | 24.5 | Hexane (150) | 40 | 15 | 12.3 | 0.62M[a] | 15 | 41 | 15 | 20 | 7.6[a] | 15 | 30 |
| 4 | 30.86 | Heptane (300) | 46.3 | 30 | 46.3 | 1.0M[b] | 30 | 49.8 | 30 | 60 | 12.3[b] | 15 | 120 |

a: in hexane

b: in heptane

0 033 036

## Example 8

This example illustrates the increase in molecular weight distribution obtained using a catalyst according to the present invention.

The polymerisation procedure of Example 1 was repeated except that 6.0 mls of a molar solution of aluminium tri-n-octyl in heptane (as activator) and 1.3 ml of a slurry of the pacified catalyst component prepared in Example 5 (containing 0.048 m Atoms of total transition metal) was used, the reactor being pressurised first to 300 k Pa with hydrogen, then to 150 psig with ethylene. 200 mls of liquid butene-1 was added during pressurisation to 1100 KPa. The polymerisation was allowed to continue for 2 hours at 80°C.

The copolymer product was worked up as in Example 1 to yield 175 grams containing 2.7 molar per cent butene-1. The MFI was 0.26 and the flow ratio was 55 being indicative of a much broader molecular weight distribution than that of the polymer obtained in Example 1.

## Examples 9 and 10

These examples illustrate the increased activity obtained when pacified catalyst components according to the present invention are used to polymerise ethylene.

The polymerisation of ethylene was carried out as follows. A commercial hydrogenator (hydrogenation Control Unit from Electrosound Supplies Ltd.) was adapted to deliver ethylene to a 500 ml vessel containing 200 ml isooctane at 20°C. The vessel was stirred with a VIBRO-MIXER E1. 2.0 ml of 0.8 M tri alkyl aluminium was added to the isooctane which was then saturated with ethylene at 80°C and the polymerisation started by addition of a slurry of a catalyst component. The results are given in Table 2 from which it can be seen that the pacified catalyst components used in Examples 9 and 10 give catalysts of greater activity than the catalyst components used in the comparative tests.

TABLE 2

| Example | Catalyst Component | | | Reaction Time | Wt of Product (gm) | Activity of Catalyst (gm milliatoms Ti$^{-1}$ at$^{-1}$ h$^{-1}$) |
|---------|-------------|--------------|---------------|--------|--------|--------|
| | Preparation | Vol of Slurry | Milliatoms Ti | | | |
| 9 | Ex 6 | 1.0 | 0.01 | 1h | 2.4 | 537 |
| CT | Ex 3 | 1.0 | 0.01 | 1h | 1.2 | 313 |
| 10 | Ex 7 | 2.0 | 0.04 | 1 h | 3.1 | 170 |
| CT | Ex 4 | 2.0 | 0.04 | 1 h | 0.8 | 45 |

CT: Comparative Test

0 033 036

**Claims**

1. A catalyst component which is the product of treating at least one particulate support material with a component A which is at least one organomagnesium compound; a component B which is at least one aluminium compound of the general formula $R_nAlY_{3-n}$ wherein R, each of which may be the same or different, represents a hydrocarbyl group or substituted hydrocarbyl group such as alkyl, aryl, cycloalkyl, aralkyl, alkenyl or alkadienyl, n is 0, 1, 2, 3 or a fraction less than 3, and Y is a singly charged ligand such as hydride, fluoride, chloride, bromide, iodide or oxyhydrocarbyl; and a component C which is at least one transition metal compound of Groups IVA, Va or VIA of the Periodic Table characterised in that the at least one particulate support material is treated with a component D which is at least one organometallic compound of the general formula $R'_mMX_p$ wherein M is a metal of Groups IA, IIA, IIB, IIIB, IVA, VA or VIA of the Periodic Table, R' is a hydrocarbyl or a substituted hydrocarbyl group, X is a singly charged anionic ligand or a monodentate neutral ligand, m is an integer up to the highest valency of the metal M and p is 0 or an integer up to 2 less than valency of the metal M, except that when M is a metal from Group VIA p is always 0, and when M is a metal from Groups IVA, or VA m has a value from 2 to the highest valency of the metal and p has a value from 0 to a value of 2 less than the valency of the metal M; and optionally a component E which is at least one pacifying agent, which treatment may be effected in any order or combination with the provisos that (i) at least one of the aforesaid components A to D contains a halide group, (ii) where component A or component B or component D is a Ziegler-Natta activator and the at least one particulate support material is treated therewith after treatment with component C, the at least one particulate support material is treated with component E after treatment with the said activator, (iii) where the metal M in component D is magnesium, component D and component A must not be added consecutively or together as a mixture, and that where the metal M in component D is aluminium, component D, and component B must not be added consecutively or together as a mixture or complex and (iv) where (a) the at least one particulate support material is treated with component E, (b) component E is a halogen-containing compound, (c) component C is titanium tetrachloride and (d) the metal M in component D is a transition metal, the at least one particulate support material is not treated with a mixture or complex of component A and component B.

2. A catalyst component as claimed in claim 1 wherein in component D M is a transition metal of Groups IVA, VA or VIA of the Periodic Table.

3. A catalyst component as claimed in claim 2 wherein in component D at least one of the hydrocarbyl groups R' is $\pi$-allyl or $\pi$-methallyl.

4. A catalyst component as claimed in claim 3 wherein component D is selected from the group consisting of tetrakis ($\pi$-allyl) zirconium and hafnium, tris ($\pi$-allyl)chromium, tetrakis ($\pi$-methallyl)-zirconium and hafnium, tris ($\pi$-methallyl) chromium and zirconium tris ($\pi$-allyl)bromide.

5. A catalyst component as claimed in claim 2 wherein in component D $R'_mMX_p$, at least one of the hydrocarbyl or substituted hydrocarbyl groups R' has the formula $-CH_2Z$ and is sigma-bonded to the transition metal M through the carbon atom where Z is a mono or polyaromatic group, cycloalkenyl group or the group $-A(R^2)_3$ where A represents carbon, silicon, germanium, tin or lead and $R^2$ represents a hydrocarbyl group or hydrogen.

6. A catalyst component as claimed in claim 5 wherein $-CH_2Z$ is selected from the group consisting of benzyl, 1-methylene-1-naphthyl, p-methylbenzyl, trimethylsilylmethylene, neopentyl and neophyl.

7. A catalyst component as claimed in claim 6 wherein component D is selected from the group consisting of zirconium and titanium tetrabenzyl, tris(benzyl) zirconium chloride, zirconium tetrakis (p-methylbenzyl) titanium and zirconium tetrakis (1-methylene-1-naphthyl), zirconium tetrakis (trimethylsilylmethylene), zirconium tetrakis (neopentyl) and zirconium tetrakis (neophyl).

8. A catalyst component as claimed in any one of the preceding claims which has been treated with component E.

9. A catalyst component as claimed in claim 8 in which the at least one particulate support material is treated with components A, B, C and D prior to treatment with component E.

10. A catalyst component as claimed in claim 8 or 9 in which component E is oxygen, carbon monoxide, carbon dioxide, a halohydrocarbon, a carbon tetrahalide or a protic agent.

11. A catalyst component as claimed in claim 10 in which component E is a aliphatic alcohol having 1 to about 6 carbon atoms, an anhydrous hydrogen halide, a halohydrocarbon or a carbon tetrahalide.

12. An olefin polymerisation catalyst comprising a catalyst component as claimed in any of the preceding claims activated with a suitable activator which is at least one organometallic compound of a non-transition metal of Groups I to IV of the Periodic Table.

13. A process for the polymerisation of copolymerisation of an olefinically unsaturated monomer which process comprises contacting, under polymerisation conditions, at least one olefin monomer with a catalyst as claim in claim 12.

14. A process as claimed in claim 13 whenever effected in a fluidised bed reactor.

11

**0 033 036**

**Revendications**

1. Constituant de catalyseur qui est le produit du traitement d'au moins une matière de support à l'état de particules avec un constituant A qui est au moins un composé organique de magnésium; un constituant B qui est au moins un composé d'aluminium de formule générale $R_nAlY_{3-n}$ où les groupes R, qui peuvent être identiques ou différents, représentent un groupe hydrocarbyle ou un groupe hydrocarbyle substitué tel que alcoyle, aryle, cycloalcoyle, aralcoyle, alcényle ou alcadiényle, n est égal à 0, 1, 2, 3 ou à une fraction inférieure à 3, et Y est un coordinat à charge simple tel que hydrure, fluorure, chlorure, bromure, iodure ou oxyhydrocarbyle, et un constituant C qui est un moins un composé de métal de transition des groupes IVA, VA ou VIA de la Classification Périodique, caractérisé en ce que la matière de support à l'état de particules au moins présente est traitée avec un constituant D qui est au moins un composé organo-métallique de formule générale $R'_mMX_p$, où M est un métal des groupes IA, IIA, IIB, IIIB, IVA, VA ou VIA de la Classification Périodique, R' est un hydrocarbyle ou un groupe hydrocarbyle substitué, X est un coordinat anionique à charge simple ou un coordinat neutre monodenté, m est un nombre entier pouvant aller jusqu'à la valence maximum du métal M et p est égal à O ou est un nombre entier pouvant aller jusqu'à une valeur qui est de 2 inférieur à la valence du métal M, sauf que, lorsque M est un métal du groupe VIA, p est toujours égal à O, et lorsque M est un métal des groupes IVA ou VA, m a une valeur allant de 2 jusqu'à la valence maximum du métal et p a une valeur allant de O jusqu'à une valeur inférieure de 2 à la valence du métal M; et facultativement un constituant E qui est au moins un agent de pacification, ce traitement pouvant être effectué dans un ordre ou selon une combinaison quelconque à la condition que (i) l'un au moins des constituants précités A à D contienne un groupe halogénure, (ii) quand le constituant A ou le constituant B ou le constituant D est un activateur de Ziegler-Natta et la matière de support à l'état de particules au moins présente est traitée avec celui-ci après traitement par le constituant C, la matière de support à l'état de particules au moins présente est traitée avec le constituant E après traitement par cet activateur, (iii) quand le métal M dans le constituant D est du magnésium, le constituant D et le constituant A ne doivent pas être ajoutés de façon consécutive ou ensemble sous forme de mélange et que, lorsque le métal M dans le constituant D est de l'aluminium, le constituant D et le constituant B ne doivent pas être ajoutés de façon consécutive ou ensemble sous forme de mélange ou de complexe, et (iv) quand (a) la matière de support à l'état de particules au moins présente est traitée avec le constituant E, (b) le constituant E est un composé contenant un halogène, (c) le constituant C est du tétrachlorure de titane, et (d) le métal M dans le constituant D est un métal de transition, la matière de support à l'état de particules au moins présente n'est pas traitée avec un mélange ou complexe du constituant A et du constituant B.

2. Constituant de catalyseur suivant la revendication 1, caractérisé en ce que, dans le constituant D, M est un métal de transition des groupes IVA, VA ou VIA de la Classification Périodique.

3. Constituant de catalyseur suivant la revendication 2, caractérisé en ce que, dans le constituant D, l'un au moins des groupes hydrocarbyle R' est un groupe $\pi$-allyle ou $\pi$-méthallyle.

4. Constituant de catalyseur suivant la revendication 3, caractérisé en ce que le costituant D est choisi dans le groupe comprenant les tétrakis($\pi$-allyl) zirconium et hafnium, le tris($\pi$-allyl)chrome, les tétrakis($\pi$-méthallyl)zirconium et hafnium, le tris($\pi$-méthallyl)chrome et le tris($\pi$-allyl)bromure de zirconium.

5. Constituant de catalyseur suivant la revendication 2, caractérisé en ce que, dans le constituant D, $R'_mMX_p$, l'un au moins des groupes hydrocarbyle ou hydrocarbyle substitué R' répond à la formule $—CH_2Z$ et est fixé en $\sigma$ sur le métal de transition M par l'intermédiaire de l'atome de carbone, où Z est un groupe mono ou polyaromatique, un groupe cycloalcényle ou le groupe $—A(R^2)_3$, où A représente du carbone, du silicium, du germanium, de l'étain ou du plomb et $R^2$ représente un groupe hydrocarbyle ou de l'hydrogène.

6. Constituant de catalyseur suivant la revendication 5, caractérisé en ce que, $—CH_2Z$ est choisi dans le groupe comprenant les groupes benzyle, 1-méthylène-1-naphtyle, p-méthylbenzyle, triméthylsilylméthylène, néopentyle et néophyle.

7. Constituant de catalyseur suivant la revendication 6, caractérisé en ce que le constituant D est choisi dans le groupe comprenant le zirconium et le titane-tétrabenzyle, le chlorure de tris(benzyl)-zirconium, le zirconium-tétrakis(p-méthylbenzyle), le titane et le zirconium-tétrakis(1-méthylène-1-naphtyle), le zirconiumtétrakis(triméthylsilylméthylène), le zirconium-tétrakis (néopentyle) et le zirconium-tétrakis(néophyle).

8. Constituant de catalyseur suivant l'une quelconque des revendications précédentes, qui a été traité avec le constituant E.

9. Constituant de catalyseur suivant la revendication 8, caractérisé en ce que la matière de support à l'état de particules au moins présente est traitée avec les constituants A, B, C et D avant le traitement avec le constituant E.

10. Constituant de catalyseur suivant la revendication 8 ou 9, caractérisé en ce que le constituant E est de l'oxygène, du monoxyde de carbone, du dioxyde de carbone, un hydrocarbure halogéné, un tétra-halogénure de carbone ou un agent protonique.

11. Constituant de catalyseur suivant la revendication 10, caractérisé en ce que le constituant E

12

est un alcool aliphatique ayant de 1 à 6 atomes de carbone environ, un halogénure d'hydrogène anhydre, un hydrocarbure halogéne ou un tétrahalogénure de carbone.

12. Catalyseur de polymérisation des oléfines renfermant un constituant de catalyseur suivant l'une quelconque des revendications précédentes, activé avec un activateur convenable qui est au moins un composé organométallique d'un métal autre qu'un métal de transition des groupes I à IV de la Classification Périodique.

13. Procédé pour la polymérisation ou la copolymérisation d'un monomère à insaturation oléfinique, ce procédé consistant à mettre en contact, dans des conditions de polymérisation, au moins un monomère oléfinique avec un catalyseur suivant la revendication 12.

14. Procédé suivant la revendication 13, chaque fois qu'il est mis en oeuvre dans un réacteur à lit fluidisé.

## Patentansprüche

1. Katalysatorbestandteil, bei dem es sich um das Produkt der Behandlung mindestens eines teilchenförmigen Trägermaterials mit einem Bestandteil A, der mindestens eine magnesiumorganische Verbindung ist, einem Bestandteil B, der mindestens eine Aluminiumverbindung der allgemeinen Formel $R_nAlY_{3-n}$ ist, worin R eine Hydrocarbylgruppe oder eine substituierte Hydrocarbylgruppe wie z. B. eine Alkyl-, Aryl-, Cycloalkyl-, Aralkyl-, Alkenyl- oder Alkadienylgruppe bedeutet, wobei alle Reste R gleich oder verschieden sein können, n 0, 1, 2, 3 oder eine weniger als 3 betragende gebrochene Zahl ist und Y ein einfach geladener Ligand wie z. B. ein Hydrid-, Fluorid-, Chlorid-, Bromid-, Jodid- oder Hydrocarboxyion ist, und einem Bestandteil C, der mindestens eine Übergangsmetallverbindung der Gruppe IV, A, V A oder VI A des Periodensystems ist, handelt, dadurch gekennzeichnet, daß das mindestens eine teilchenförmige Trägermaterial mit einem Bestandteil D, der mindestens eine metallorganische Verbindung der allgemeinen Formel $R'_mMX_p$ ist, worin M ein Metall der Gruppe I A, II A, II B, III B, IV A, V A oder VI A des Periodensystems ist, R' eine Hydrocarbylgruppe oder eine substituierte Hydrocarbylgruppe ist, X ein einfach geladener anionischer Ligand oder einzähniger neutraler Ligand ist, m eine ganze Zahl bis zu der höchsten Wertigkeit des Metalls M ist und p 0 oder eine ganze Zahl bis zu der um 2 verminderten Wertigkeit des Metalls M ist, außer daß p immer 0 ist, wenn M ein Metall der Gruppe VI A ist, und daß meinen Wert von 2 bis zu der höchsten Wertigkeit des Metalls hat und p einen Wert von 0 bis zu einem Wert hat, der gleich der um 2 verminderten Wertigkeit des Metalls M ist, wenn M ein Metall der Gruppe IV A oder V A ist, und gegebenenfalls einem Bestandteil E, der mindestens ein Beruhigungsmittel ist, behandelt wird, wobei diese Behandlung in jeder beliebigen Reihenfolge oder Kombination durchgeführt werden kann, und zwar unter den Bedingungen, daß (i) mindestens einer der vorstehend erwähnten Bestandteile A bis D eine Halogenidgruppe enthält, (ii) das mindestens eine teilchenförmige Trägermaterial, wenn Bestandteil A oder Bestandteil B oder Bestandteil D ein Ziegler-Natta-Aktivator ist und das mindestens eine teilchenförmige Trägermaterial nach der Behandlung mit Bestandteil C mit dem Aktivator behandelt wird, nach der Behandlung mit dem Aktivator mit Bestandteil E behandelt wird, (iii) Bestandteil D und Bestandteil A weder aufeinanderfolgend noch miteinander als Mischung zugegeben werden dürfen, wenn das Metall M in Bestandteil D Magnesium ist, und Bestandteil D und Bestandteil B weder aufeinanderfolgend noch miteinander als Mischung oder Komplex zugegeben werden dürfen, wenn das Metall M in Bestandteil D Aluminium ist, und (iv) das mindestens eine teilchenförmige Trägermaterial nicht mit einer Mischung oder einem Komplex von Bestandteil A und Bestandteil B behandelt wird, wenn (a) das mindestens eine teilchenförmige Trägermaterial mit Bestandteil E behandelt wird, (b) Bestandteil E eine halogenhaltige Verbindung ist, (c) Bestandteil C Titantetrachlorid ist und (d) das Metall M in Bestandteil D ein Übergangsmetall ist.

2. Katalysatorbestandteil nach Anspruch 1, bei dem in Bestandteil D M ein Übergangsmetall der Gruppe IV A, V A oder VI A des Periodensystems ist.

3. Katalysatorbestandteil nach Anspruch 2, bei dem in Bestandteil D mindestens eine der Hydrocarbylgruppen R' eine $\pi$-Allyl- oder $\pi$-Methallylgruppe ist.

4. Katalysatorbestandteil nach Anspruch 3, bei dem Bestandteil D aus Tetrakis($\pi$-allyl)-zirkonium und -hafnium, Tris($\pi$-allyl)chrom, Tetrakis($\pi$-methallyl)zirkonium und -hafnium, Tris($\pi$-methallyl)chrom und Zirkoniumtris($\pi$-allyl)bromid ausgewählt ist.

5. Katalysatorbestandteil nach Anspruch 2, bei dem in Bestandteil D, $R'_mMX_p$, mindestens eine der Hydrocarbylgruppen oder substituierten Hydrocarbylgruppen R' die Formel $—CH_2Z$ hat und durch das Kohlenstoffatom mit einer $\sigma$-Bindung an das Übergangsmetall M gebunden ist, worin Z eine mono- oder polyaromatische Gruppe, eine Cycloalkylengruppe oder die Gruppe $—A(R^2)_3$ ist, worin A Kohlenstoff, Silicium, Germanium, Zinn oder Blei bedeutet und $R^2$ eine Hydrocarbylgruppe oder Wasserstoff bedeutet.

6. Katalysatorbestandteil nach Anspruch 5, bei dem $—CH_2Z$ aus der Benzyl-, 1-Naphthylmethyl-, p-Methylbenzyl-, Trimethylsilylmethyl-, Neopentyl- und Neophylgruppe ausgewählt ist.

7. Katalysatorbestandteil nach Anspruch 6, bei dem Bestandteil D aus Zirkonium- und Titantetrabenzyl, Tris(benzyl)zirkoniumchlorid, Zirkoniumtetrakis(p-methylbenzyl), Titan- und Zirkoniumtetrakis(1-naphthylmethyl), Zirkoniumtetrakis(trimethylsilylmethyl), Zirkoniumtetrakis(neopentyl) und Zirkoniumtetrakis(neophyl)ausgewählt ist.

13

8. Katalysatorbestandteil nach einem der vorhergehenden Ansprüche, der mit Bestandteil E behandelt worden ist.

9. Katalysatorbestandteil nach Anspruch 8, bei dem das mindestens eine teilchenförmige Trägermaterial vor der Behandlung mit Bestandteil E mit Bestandteilen A, B, C und D behandelt wird.

10. Katalysatorbestandteil nach Anspruch 8 oder 9, bei dem Bestandteil E Sauerstoff, Kohlenmonoxid, Kohlendioxid, ein Halogenkohlenwasserstoff, ein Kohlenstofftetrahalogenid oder ein protisches Agens ist.

11. Katalysatorbestandteil nach Anspruch 10, bei dem in Bestandteil E ein aliphatischer Alkohol mit 1 bis etwa 6 Kohlenstoffatomen, ein wasserfreier Halogenwasserstoff, ein Halogenkohlenwasserstoff oder ein Kohlenstofftetrahalogenid ist.

12. Olefinpolymerisationskatalysator, enthaltend einen Katalysatorbestandteil nach einem der vorhergehenden Ansprüche, der mit einem geeigneten Aktivator, bei dem es sich um mindestens eine metallorganische Verbindung eines Nicht-Übergangsmetalls der Gruppen I bis IV des Periodensystems handelt, aktiviert ist.

13. Verfahren zum Polymerisieren oder Copolymerisieren eines olefinisch ungesättigten Monomers, bei dem mindestens ein Olefinmonomer unter Polymerisationsbedingungen mit einem Katalysator nach Anspruch 12 in Kontakt gebracht wird.

14. Verfahren nach Anspruch 13, wenn es in einem Fließbett-Reaktionsbehälter durchgeführt wird.